# EUROPEAN PATENT SPECIFICATION

(11) **EP 2 410 226 B1**
(45) Date of publication and mention of the grant of the patent: **01.04.2015**
(21) Application number: 11174541.0
(22) Date of filing: 19.07.2011
(51) Int. Cl.: F16L 21/08, F16L 21/06

(54) **Arrangement comprising two tubular male and female end sections and an anti-slip collar device for clamping the tubular sections for conveying aeriforms, in particular for exhausting fumes or vapours**
Anordnung mit zwei röhrformigen männlichen und weiblichen Endabschnitten und eine Antirutsch-Halsbandvorrichtung zum Anklemmen die rohrförmigen Abschnitten zum Fördern von Gasformen, insbesondere zum Abgasen von Rauchen und Dämpfen
Ensemble comprenant deux fin de sections mâle et femelle et un dispositif de collier antiglisse pour serrer les fins de sections tubulaires de transport d'aériformes, en particulier pour éliminer des fumées ou des vapeurs

(30) Priority: 22.07.2010 IT PD20100231
(43) Date of publication of application: 25.01.2012
(73) Proprietor: SIT S.P.A., 35129 Padova (IT)
(72) Inventor: Fraticelli, Gabriele, 62011 Cingoli (MC) (IT)
(74) Representative: Fabris, Stefano

(56) References cited:
- EP-A2- 0 959 286
- EP-A2- 2 098 768
- WO-A2-2009/149406
- AT-U1- 8 709
- DE-A1- 19 837 803

## Description

The present invention relates to an arrangement comprising a collar device, a female end of a first tubular section and a male end of a second tubular section suitable to be fit into the female end of the first section, for conveying aeriforms, having the features set out in the preamble to main claim 1.

An arrangement having the features outlined in the preamble of the main claim is known from AT 8709 U1. DE19837803 is also prior art to the present invention.

In the specific technical field, it is known to produce flues for conveying and extracting fumes or vapours connected with combustion processes such as those which are present in heat-generating apparatus, by the connection of a plurality of tubular sections suitable for exhausting the above-mentioned aeriforms, with or without the use of evacuation means. A typical application is that of gas/oil boilers in which flues are used for evacuating the combustion fumes.

For correct operation of the tubular flue, it is also known to provide sealing means interposed between mutually connected pairs of contiguous tubular sections.

One of the main features of so-called coupling systems is, on the one hand, to permit relatively quick and easy coupling for the user but, on the other hand, to ensure the reliability of the connection so that correct coupling of the tubular sections is achieved, in particular, to ensure fluid-tightness which is a particularly important condition for conveying and extracting fumes and other aeriform combustion residues from domestic environments.

In the above-mentioned applications, one of the main problems that is encountered is that of relative sliding which may occur between contiguous coupled sections, for example, due to thermal expansion in exhaust flues for fumes or vapours. In this case, it is necessary to resist and prevent any slippage between coupled sections. The problem of relative sliding may also arise, irrespective of deformations of thermal origin, due to movements, for example, during the construction of particularly long exhaust flues which, in extreme conditions, may lead to slippage between contiguous sections, resulting in leakage of the gases or fumes conveyed by the flue.

The main objective of the invention is to provide an arrangement with an anti-slip collar device for clamping mutually coupled tubular sections which is designed structurally and functionally to ensure effective clamping so as to prevent slippage between coupled tubular sections and which, at the same time, permits deformations or expansions of thermal origin, simultaneously ensuring quick and easy coupling of the sections with suitable reliability of the connection.

This objective and others which will be explained further below are achieved by the invention by means of an arrangement with an anti-slip collar device for the clamping of tubular sections for conveying aeriforms, formed in accordance with the appended claims.

Further characteristics and advantages of the invention will become clearer from the following detailed description of a preferred embodiment thereof which is given by way of non-limiting example with reference to the appended drawings, in which:
Figure 1 is a perspective view of a collar device according to the arrangement of the invention,
Figure 2 is a partial axial section through the device of Figure 1,
Figure 3 is a section taken on the line III-III of Figure 2,
Figure 4 is a section taken on the line IV-IV of Figure 2,
Figure 5 is an axial section through a series of tubular sections mutually coupled by means of the anti-slip device of the preceding drawings,
Figure 6 is an axial section, on an enlarged scale, through a detail of Figure 5,
and
Figure 7 is a perspective view of the mutually coupled tubular sections shown in Figure 5.

With reference to the drawings mentioned, an anti-slip collar device for clamping between tubular sections 2, is formed in accordance with the arrangement of the present invention and generally indicated 1. Each tubular section 2 is arranged to be connected to other identical tubular sections in order to construct a flue for conveying aeriforms, particularly for exhausting and discharging fumes or vapours.

Each tubular section 2 has a circular cross-section and comprises a male end 2a and a female end 2b which are axially opposed, can be fitted into corresponding ends of contiguous sections (by male-female coupling), and can be connected thereto with the interposition of a sealing ring (not shown).

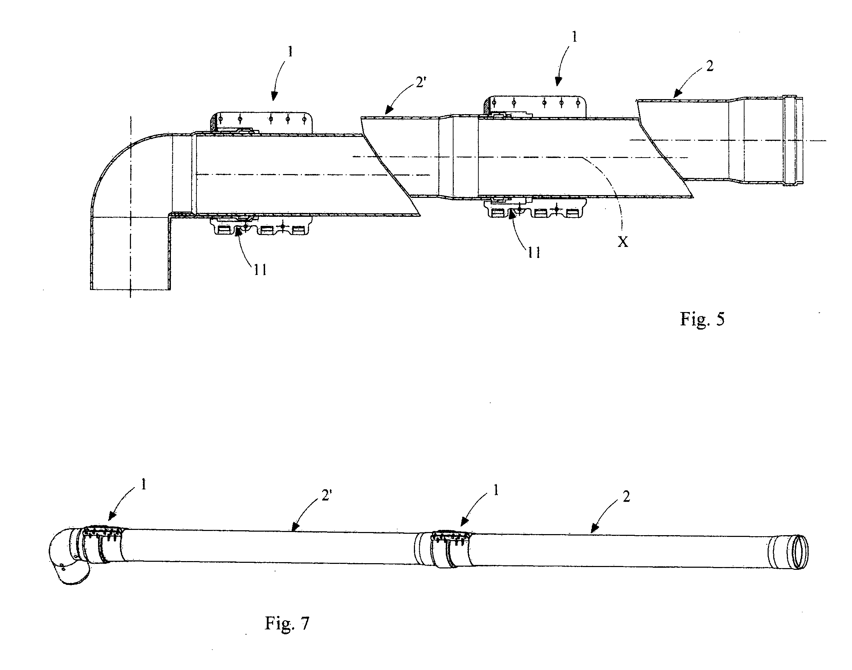

A tubular section structurally identical to the section 2 is indicated 2' in Figure 5, the sections being shown in axial alignment along their principal axes, indicated X, and arranged to be coupled by the above-mentioned system of fitting into one another. This system is provided between each pair of tubular sections for the construction of a flue by the assembly of a plurality of such tubular sections. Naturally, the system of coupling by fitting into one another may be provided on straight tubular sections as well as curved ones (curved sections with preselected angulation between the ends) in order to satisfy widely varying requirements for the assembly of the conveying flue as a whole that is constructed in the specific application. For example, Figure 7 shows a curved section with a 90° angle coupled with a straight section adjacent thereto.

The collar device 1 comprises a first collar portion and a second collar portion, indicated 1a and 1b, which can be coupled with one another in order to form the complete collar configuration that can be fitted onto the tubular sections in the manner explained in greater detail below.

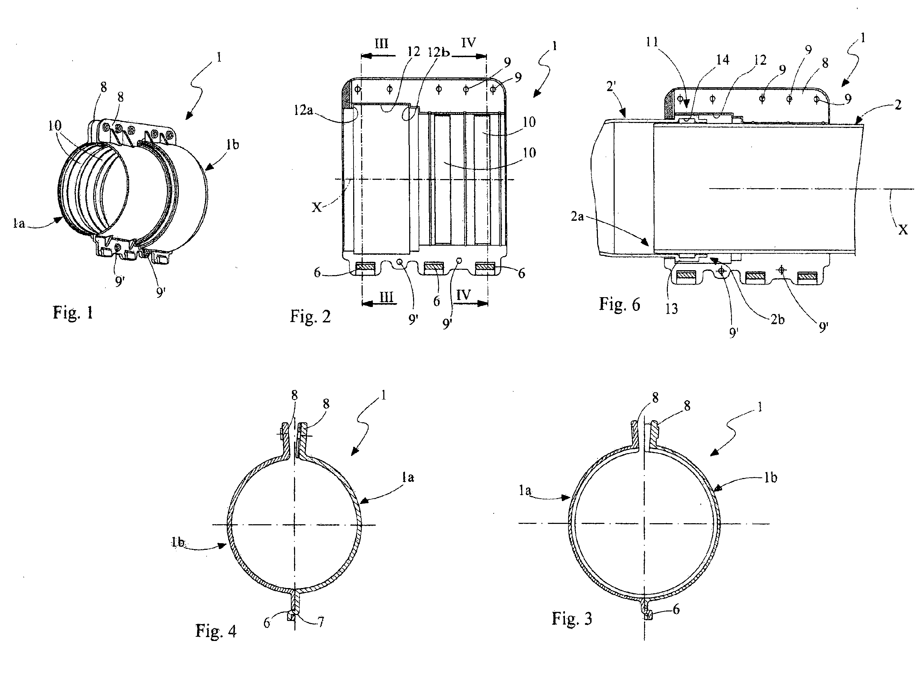

The collar portions 1a, 1b have a substantially semi-cylindrical surface configuration and comprise, along a first generatrix, articulation means and corresponding articulation means for the mutual articulation of the collar portions. The articulation means and corresponding articulation means comprise pairs of appendages 6 with bent profiles and corresponding seats 7 for the engagement of the appendages, as shown in Figure 4, so as to permit the articulated assembly of the collar portions with a capability for relative pivoting between them along the articulation generatrix.

Respective flangings 8 are provided along the axial generatrix diametrally opposite the articulation generatrix on each collar portion, with through-holes 9 formed in corresponding positions to allow the collar portions to be tightened together, for example, by suitable screw means (not shown).

Holes 9' are also provided, extending through each collar portion in the region of the articulation of the portions, for optional screw tightening thereof in addition to the mutual clamping along the flangings 8.

The collar device 1 is arranged to be fitted on the tubular sections 2 in the region of the coupling between the corresponding ends 2a, 2b of respective contiguous sections 2, 2'.

A first part and a second part can be identified, in the axial direction, in each collar portion; the first and second parts extend from one another and are intended to cooperate, during the tightening of the collar, with the respective male and female ends (2a, 2b) of the mutually coupled, contiguous tubular sections. In the first collar part, each portion thereof is provided with a pair of raised portions 10 which extend circumferentially (so as to be concentric with the axis X) from the internal collar surface and are mutually spaced apart. More particularly, each portion 1a, 1b is provided with a pair of raised portions 10 extending along respective semi-circumferential arcs so that, during the tightening of the collar, the two collar portions jointly define raised portions each of which extends along a complete circumferential arc concentric with the axis X.

The pair of raised portions 10 thus defined is preferably produced by the injection co-moulding of the collar and, more particularly, the raised portions are co-moulded of a material having greater resilient compliance than the plastics material of which the collar is formed. During the tightening of the collar onto the tubular sections, the raised portions are pressed against the outer surface of the male end 2a by the pressure exerted by the screw means for the tightening of the flangings 8 so that the male end is fixed firmly to the collar by frictional clamping between the mutually contacting surfaces (the raised portion and the male end, respectively).

The collar is arranged so that, as a result of the tightening, it is fitted on the female end with a small radial clearance to allow that end freedom to slide relative to the collar.

The collar device further comprises means for limiting the axial movement of the female end 2b relative to the collar, which means comprise a groove 12 that extends circumferentially in the inner surface of the collar, the groove preferably being formed by two contiguous semi-circumferential groove portions which are provided in respective collar portions and which extend from one another. The groove 12 is delimited axially by a pair of opposed shoulder surfaces 12a, 12b, both defined along corresponding semi-circumferential arcs on one portion and on the other portion, respectively. The groove 12, which is thus concentric with the axis X, can house an annular projection 13 extending from the external surface of the female end 2b of the corresponding tubular section, the projection having a capacity for limited axial sliding between the opposed shoulder surfaces 12a, 12b, against which it can come into abutment at the ends of the above-mentioned axial travel. The amplitude of the axial sliding is selected so as to allow the female end 2b freedom to slide relative to the collar and to the male end which is fixed firmly thereto, nevertheless preventing contiguous tubular sections from slipping apart, as is clearly shown in Figure 5 in which extreme abutment positions of the female ends in two contiguous tubular sections are shown. Freedom is thus also afforded for sliding caused by any axial deformations/expansions of thermal origin, whilst the mutually coupled sections are in any case prevented from slipping apart.

It should also be noted that the projection 13 defines, on the opposite side, inside the axial cavity of the female end, an annular seat 14 for housing the respective sealing ring in contact with the external surface of the male end so as to ensure leaktightness between the ends that are coupled by being fitted together axially.

The invention thus achieves the objectives proposed, affording many advantages over known solutions.

A main advantage lies in the quick and easy fitting of the anti-slip collar according to the arrangement of the invention which is designed to permit limited relative axial sliding between the coupled tubular sections but to prevent contiguous sections from slipping apart.

Another advantage is connected with the fact that the anti-slip collar according to the arrangement of the invention can also be used in existing tubular installations suitably arranged for coupling thereby.

## Claims

1. An arrangement comprising a collar device (1), a female end (2b) of a first tubular section (2) and a male end (2a) of a second tubular section (2) suitable to be fit into the female end (2b) of the first section, for conveying aeriforms, the collar device (1) being provided for clamping between the tubular sections (2) to prevent them from slipping apart, wherein each tubular section comprises a male end (2a) and a female end (2b) axially opposed, fluid-tight sealing means being interposed between the male and female ends (2a, 2b) for leaktight coupling between them, said collar device (1) comprising:
- a first collar portion (1a) and a second collar portion (1b) which can be coupled with one another in order to fit the collar (1) onto the tubular sections (2) in the region of the coupling between the corresponding male and female ends (2a, 2b) of respective contiguous sections (2),
- tightening means (8, 9, 10) between the portions (1a, 1b) for tightening the collar (1) onto the sections (2), and and in that said collar device further comprises
- means (12a, 12b) for limiting the axial movement of the female end (2b), the limiting means (12a, 12b) being provided on the collar portions (1a, 1b) and being suitable for cooperating with the female end (2b) to limit relative axial sliding between the mutually coupled male and female ends (2a, 2b), preventing adjacent tubular sections (2) from slipping apart, **characterized in that** said tightening means (8, 9, 10) are provided for fixing the collar (1) firmly to the corresponding male end (2a) with the provision of radial clearance in the coupling with the female end (2b) so as to allow the female end (2b) freedom to slide axially relative to the collar (1),

2. An arrangement according to claim 1 in which the limiting means comprise a groove (12) which extends circumferentially in an inner surface of the collar device (1) and which is delimited axially by a pair of opposed shoulder surfaces (12a, 12b), the groove (12) being capable of housing a projection (13) extending from the external surface of the female end (2b) of the corresponding tubular section (2), the projection (13) having a capacity for limited axial sliding between the shoulder surfaces (12a, 12b), against which it can come into abutment.

3. An arrangement according to claim 2 in which the projection (13) defines, inside the tubular cavity of the female end (2b), at least one annular seat (14) for housing at least one corresponding sealing element which can be interposed between the respective mutually coupled surfaces of the male and female ends (2a, 2b), for the purpose of sealing between them.

4. An arrangement according to any one of the preceding claims in which the tightening means (8, 9, 10) comprise at least one annular raised portion (10) which projects inside the collar (1) and is capable of mutual contact with the cylindrical outer surface of the male end (2a) so that, as a result of the tightening of the collar device onto the tubular sections (2), the male end (2a) is fixed firmly by frictional clamping between the mutually contacting surfaces of the raised portion (10) and of the male end (2a).

5. An arrangement according to claim 4 in which at least a pair of raised portions (10) is provided, extending circumferentially inside the collar (1) and in a mutually spaced-apart arrangement.

6. An arrangement according to claim 5 in which the raised portions (10) are formed by injection co-moulding in the collar.

7. An arrangement according to any one of the preceding claims in which the portions (1a, 1b) have a semi-cylindrical surface configuration and comprise respective articulation means (7) and corresponding articulation means (6) which are arranged along a first axial generatrix of coupling of the portions (1a, 1b), the portions comprising respective flangings (8) extending along the opposite axial generatrix, the male end (2a) of the corresponding tubular section (2) being fixed firmly to the collar device by the tightening together of the flangings (8) so as to tighten the collar (1) between the mutually coupled tubular sections (2) on which it is fitted.

8. An arrangement according to claim 6 in which the collar (1) is made of plastics material and in which the raised portions (10) are co-moulded of a material having greater resilient compliance than the plastics material of the collar (1).

9. An arrangement according to claim 7 in which through-holes (9) are provided through each portion (1a, 1b) and are formed in corresponding positions along the side corresponding to the first generatrix, for screw tightening of the portions (1a, 1b) in addition to the tightening performed with the flangings (8).

## Patentansprüche

1. Anordnung zum Fördern von Gasformen mit einer Manschettenvorrichtung (1), einem weiblichen Endabschnitt (2b) eines ersten rohrförmigen Abschnitts (2) und einem männlichen Endabschnitt (2a) eines zweiten rohrförmigen Abschnitts (2), der geeignet ist, um in den weiblichen Endabschnitt (2b) des ersten Abschnittes eingepasst zu werden, wobei die Manschettenvorrichtung (1) zum Anklemmen zwischen zwei rohrförmigen Abschnitten (2) vorgesehen ist, um zu verhindern, dass sie auseinander gleiten, wobei jeder rohrförmige Abschnitt einen männlichen Endabschnitt (2a) und einen weiblichen Endabschnitt (2b), die sich axial gegenüber liegen, aufweist, wobei eine flüssigkeitsdichte Abdichtungseinrichtung zwischen den männlichen und weiblichen Endabschnitten (2a, 2b) zur leckdichten Verbindung zwischen ihnen angeordnet ist, wobei die Manschettenvorrichtung (1) aufweist:
- einen ersten Manschettenbereich (1a) und einen zweiten Manschettenbereich (1b), die miteinander verbunden werden können, um die Manschette (1) auf den rohrförmigen Abschnitten (2) im Bereich der Verbindung zwischen den entsprechenden männlichen und weiblichen Endabschnitten (2a, 2b) der jeweiligen benachbarten Abschnitte (2) einzupassen,
- eine Festzieheinrichtung (8, 9, 10) zwischen den Bereichen (1a, 1b) zum Festziehen der Manschette (1) auf den Abschnitten (2),
- und die Manschettenvorrichtung ferner aufweist:
- Einrichtungen (12a, 12b) zum Begrenzen der axialen Bewegung des weiblichen Endabschnitts (2b), wobei die Begrenzungseinrichtungen (12a, 12b) auf dem Manschettenbereich (1a, 1b) vorgesehen sind und zur Zusammenwirkung mit dem weiblichen Endabschnitt (2b) geeignet sind, um ein relatives axiales Gleiten zwischen den gemeinsam verbundenen männlichen und weiblichen Endabschnitten (2a, 2b) zu begrenzen, um zu verhindern, dass benachbarte rohrförmige Abschnitte (2) auseinander gleiten,
**dadurch gekennzeichnet, dass** die Festzieheinrichtung (8, 9, 10) zum stabilen Fixieren der Manschette (1) am entsprechenden männlichen Endabschnitt (2a) mit der Festlegung eines radialen Zwischenraumes an der Verbindung mit dem weiblichen Endabschnitt (2b) vorgesehen ist, um somit dem weiblichen Endabschnitt (2b) einen Freiraum zu ermöglichen, um axial relativ zur Manschette (1) zu gleiten.

2. Anordnung gemäß Anspruch 1, in der die Begrenzungseinrichtung eine Nut (12) aufweist, die sich umfangsmäßig in einer inneren Fläche der Manschettenvorrichtung (1) erstreckt und die axial durch ein Paar gegenüberliegender Schulterflächen (12a, 12b) abgegrenzt ist, wobei die Nut (12) einen Vorsprung (13) aufnehmen kann, der sich von der äußeren Fläche des weiblichen Endabschnitts (2b) des entsprechenden rohrförmigen Abschnitts (2) erstreckt, wobei der Vorsprung (13) eine Fähigkeit zum begrenzten axialen Gleiten zwischen den Schulterflächen (12a, 12b), an denen er anliegen kann, aufweist.

3. Anordnung gemäß Anspruch 2, in der der Vorsprung (13) innerhalb der rohrförmigen Aussparung des weiblichen Endabschnitts (2b) zumindest einen ringförmigen Sitz (14) zum Aufnehmen von zumindest einem entsprechenden Abdichtelement bildet, der zwischen den jeweiligen gemeinsam verbundenen Flächen der männlichen und weiblichen Endabschnitte (2a, 2b) zur Abdichtung zwischen ihnen angeordnet werden kann.

4. Anordnung gemäß einem der vorhergehenden Ansprüche, in der die Festzieheinrichtung (8, 9, 10) zumindest einen ringförmigen erhöhten Bereich (10), der innerhalb der Manschette (1) hervorsteht und einen gemeinsamen Kontakt mit der zylindrischen Außenfläche des weiblichen Endabschnitts (2a) bilden kann, aufweist, so dass als Ergebnis des Festziehens der Manschettenvorrichtung auf den rohrförmigen Abschnitten (2) der männliche Endabschnitt (2a) fest durch reibschlüssiges Anklemmen zwischen den gemeinsamen Kontaktflächen des erhöhten Bereichs (10) und des männlichen Endabschnittes (2a) fixiert ist.

5. Anordnung gemäß Anspruch 4, in der zumindest ein Paar erhöhter Bereiche (10) vorgesehen ist, das sich umfangsmäßig innerhalb der Manschette (1) erstreckt und sich in einer gemeinsamen beabstandeten Anordnung befindet.

6. Anordnung gemäß Anspruch 5, in der die erhöhten Bereiche (10) durch Spritzgießen in der Manschette ausgebildet werden.

7. Anordnung gemäß einem der vorhergehenden Ansprüche, in der die Bereiche (1a, 1b) eine halbzylindrische Flächenkonfiguration aufweisen und eine jeweilige Gelenkeinrichtung (7) und eine entsprechende Gelenkeinrichtung (6) aufweisen, die entlang einer ersten axialen Verbindungskante/Verbindungsgeneratrix der Bereiche (1a, 1b) angeordnet sind, wobei die Bereiche jeweilige Bördelungen (8) aufweisen, die sich entlang der entgegengesetzten axialen Kante erstrecken, wobei der männliche Endabschnitt (2a) des entsprechenden rohrförmigen Abschnitts (2) fest an der Manschettenvorrichtung durch gemeinsames Festziehen mit den Bördelungen (8) fixiert ist, um somit die Manschette (1) zwischen den gemeinsam verbundenen rohrförmigen Abschnitten (2), auf denen sie eingepasst ist, festzuziehen.

8. Anordnung gemäß Anspruch 6, in der die Manschette (1) aus Kunststoff hergestellt ist und in der die erhöhten Bereiche (10) aus einem Material ausgeformt sind, das eine größere elastische Einhaltung als der Kunststoff der Manschette (1) aufweist.

9. Anordnung gemäß Anspruch 7, in der Durchgangsbohrungen (9) durch jeden Bereich (1 a, 1 b) vorgesehen und in entsprechenden Positionen entlang der Seite, die der ersten Kante entspricht, zum Festschrauben der Bereiche (1a, 1b) zusätzlich zum Festziehen, das mit den Bördelungen (8) ausgeführt wird, ausgebildet sind.

## Revendications

1. Agencement comprenant un dispositif de collier (1), une extrémité femelle (2b) d'une première section tubulaire (2) et une extrémité mâle (2a) d'une seconde section tubulaire (2) appropriée pour être montée dans l'extrémité femelle (2b) de la première section, afin de transporter des aériformes, le dispositif de collier (1) étant prévu pour serrer les sections tubulaires (2) entre elles afin de les empêcher de glisser, dans lequel chaque section tubulaire comprend une extrémité mâle (2a) et une extrémité femelle (2b) axialement opposées, des moyens d'étanchéité au fluide étant intercalés entre les extrémités mâle et femelle (2a, 2b) pour réaliser un couplage étanche aux fuites entre elles, ledit dispositif de collier (1) comprenant :
une première partie de collier (1a) et une seconde partie de collier (1b) qui peuvent être couplées entre elles afin de monter le collier (1) sur les sections tubulaires (2) dans la région du couplage entre les extrémités mâle et femelle (2a, 2b) correspondantes des sections contiguës (2) respectives,
des moyens de serrage (8, 9, 10) entre les parties (1a, 1b) pour serrer le collier (1) sur les sections (2) et
en ce que ledit dispositif de collier comprend en outre :
des moyens (12a, 12b) pour limiter le mouvement axial de l'extrémité femelle (2b), les moyens de limitation (12a, 12b) étant prévus sur les parties de collier (1a, 1b) et étant appropriés pour coopérer avec l'extrémité femelle (2b) pour limiter le coulissement axial entre les extrémités mâle et femelle (2a, 2b) mutuellement couplées, empêchant le glissement des sections tubulaires (2) adjacentes,
**caractérisé en ce que** lesdits moyens de serrage (8, 9, 10) sont prévus pour fixer fermement le collier (1) à l'extrémité mâle (2a) correspondante en prévoyant un jeu radial dans le couplage avec l'extrémité femelle (2b) afin de permettre à l'extrémité femelle (2b) de coulisser librement axialement par rapport au collier (1).

2. Agencement selon la revendication 1, dans lequel les moyens de limitation comprennent une rainure (12) qui s'étend de manière circonférentielle dans une surface interne du dispositif de collier (1) et qui est délimitée axialement par une paire de surfaces d'épaulement (12a, 12b) opposées, la rainure (12) pouvant loger une saillie (13) s'étendant à partir de la surface externe de l'extrémité femelle (2b) de la section tubulaire (2) correspondante, la saillie (13) ayant une capacité de coulissement limité axial entre les surfaces d'épaulement (12a, 12b), contre lesquelles elle peut venir en butée.

3. Agencement selon la revendication 2, dans lequel la saillie (13) définit, à l'intérieur de la cavité tubulaire de l'extrémité femelle (2b), au moins un siège annulaire (14) pour loger au moins un élément d'étanchéité correspondant qui peut être intercalé entre les surfaces des extrémités mâle et femelle (2a, 2b) respectives mutuellement couplées, afin de réaliser l'étanchéité entre elles.

4. Agencement selon l'une quelconque des revendications précédentes, dans lequel les moyens de serrage (8, 9, 10) comprennent au moins une partie annulaire relevée (10) qui fait saillie à l'intérieur du collier (1) et est capable de contact mutuel avec la surface externe cylindrique de l'extrémité mâle (2a) de sorte que, à cause du serrage du dispositif de collier sur les sections tubulaires (2), l'extrémité mâle (2a) est fermement fixée par serrage par friction entre les surfaces mutuellement en contact de la partie relevée (10) et de l'extrémité mâle (2a).

5. Agencement selon la revendication 4, dans lequel on prévoit au moins une paire de parties relevées (10), s'étendant de manière circonférentielle à l'intérieur du collier (1) et dans un agencement mutuellement espacé.

6. Agencement selon la revendication 5, dans lequel les parties relevées (10) sont formées par co-moulage par injection dans le collier.

7. Agencement selon l'une quelconque des revendications précédentes, dans lequel les parties (1a, 1b) ont une configuration de surface semi-cylindrique et comprennent des moyens d'articulation (7) respectifs et des moyens d'articulation (6) correspondants qui sont agencés le long d'une première génératrice axiale de couplage des parties (1a, 1b), les parties comprenant des bridages (8) respectifs s'étendant le long de la génératrice axiale opposée, l'extrémité mâle (2a) de la section tubulaire (2) correspondante étant fermement fixée au dispositif de collier en serrant les bridages (8) ensemble afin de serrer le collier (1) entre les sections tubulaires (2) mutuellement couplées sur lesquelles elle est montée.

8. Agencement selon la revendication 6, dans lequel le collier (1) est réalisé avec une matière plastique et dans lequel les parties relevées (10) sont co-moulées avec un matériau ayant une élasticité résiliente plus importante que la matière plastique du collier (1).

9. Agencement selon la revendication 7, dans lequel les trous débouchants (9) sont prévus à travers chaque partie (1a, 1b) et sont formés dans des positions correspondantes le long du côté correspondant à la première génératrice, pour un serrage à la vis des parties (1a, 1b), en plus du serrage réalisé avec les bridages (8).
